# DEMANDE DE BREVET EUROPEEN

(11) **EP 1 428 424 A1**
(43) Date de publication de la demande: **16.06.2004**
(21) Numéro de dépôt: 03300263.5
(22) Date de dépôt: 11.12.2003
(51) Int. Cl.: A01G 9/12, A01G 13/10, A01G 17/06

(54) **Tuteur et dispositif de protection pour un jeune plant disposé sous un fil de palissage**

(30) Priorité: 12.12.2002 FR 0215717
(71) Demandeur: Thomasson, Xavier, 47500 Monsempron (FR)
(72) Inventeur: Thomasson, Xavier, 47500 Monsempron (FR)
(74) Mandataire: Fantin, Laurent

(57) **Abrégé**

L'objet de l'invention est un tuteur sous forme d'une tige (20) susceptible d'être utilisée dans un dispositif de protection pour une plante ou un jeune plant (14) disposé au-dessous d'un fil (10), caractérisé en ce que la tige (20) comprend des moyens de liaison au fil (10).

## Description

La présente invention se rapporte à un dispositif de protection plus particulièrement destiné aux jeunes plants.

Ces dispositifs ont pour fonction de favoriser la croissance des jeunes plants en les protégeant notamment des nuisibles tels que les rongeurs ou autres, des intempéries, des produits phytosanitaires utilisés en agriculture.

Ils comprennent généralement une feuille de préférence rectangulaire susceptible de s'enrouler autour du jeune plant et disposant au niveau de deux côtés opposés de trous et une tige susceptible de maintenir la feuille en position enroulée en passant par les trous de manière adéquate et d'être enfoncée dans le sol afin de maintenir le dispositif de protection en position verticale.

En fonction des cas, la feuille peut être réalisée à partir de différents matériaux, notamment en matériaux résistants aux rayons ultra-violets et/ou favorisant la croissance du plant en absorbant la chaleur, de différentes formes en général rectangulaire, être imperméable ou à maille et avoir une ou plusieurs épaisseurs.

Même si ces dispositifs permettent de protéger le jeune plant de manière satisfaisante, ils ne donnent pas entièrement satisfaction car ces dispositifs peuvent d'une part être couchés en cas de forts vents si bien qu'ils n'assurent plus la fonction de tuteur, et d'autre part, être aspirés par les appareils de culture, par exemple une vendangeuse dans le cas de la vigne, et causer des dommages auxdits appareils.

Aussi, la présente invention vise à pallier les inconvénients des dispositifs existants en proposant un dispositif de protection de jeunes plants amélioré.
A cet effet, l'invention a pour objet un dispositif susceptible de protéger un jeune plant disposé au-dessous d'un fil, ledit dispositif de protection comportant une enveloppe de protection susceptible d'entourer ledit jeune plant et une tige, caractérisé en ce que la tige comprend des moyens de liaison au fil.
Selon un mode de réalisation préféré, les moyens de liaison sont obtenus par une forme adaptée de la partie supérieure de la tige, notamment une forme en vrille d'une seule spire.

D'autres caractéristiques et avantages ressortiront de la description qui va suivre de l'invention, description donnée à titre d'exemple uniquement, en regard des dessins annexés sur lesquels:
- la figure 1 est une vue illustrant le dispositif de protection en place autour d'un jeune plant,
- les figures 2A et 2B sont des vues en élévation latérale de la tige du dispositif de protection selon l'invention, et
- la figure 3 est une vue illustrant un exemple de feuille d'un dispositif de protection.

Le dispositif de protection de l'invention va être décrit appliqué à un jeune plant de vigne. Bien entendu, il peut être utilisé pour protéger tout autre jeune plant ou plante cultivé en utilisant au moins un fil dit de palissage.

La culture de la vigne se pratique en général en utilisant au moins un fil 10 dit de palissage maintenu par des piquets 12 espacés de manière adéquate.

Un jeune plant 14 est généralement disposé en dessous dudit fil 10 de palissage qui sera utilisé pour maintenir la vigne lors de son développement.

Un dispositif de protection comprend d'une part une feuille 16 susceptible de s'enrouler autour du jeune plant 14 et disposant au niveau de deux côtés opposés de trous 18, et d'autre part, une tige 20 susceptible de maintenir la feuille 16 en position enroulée en passant par les trous 18 de manière adéquate et d'être enfoncée dans le sol afin de maintenir le dispositif de protection en position verticale.

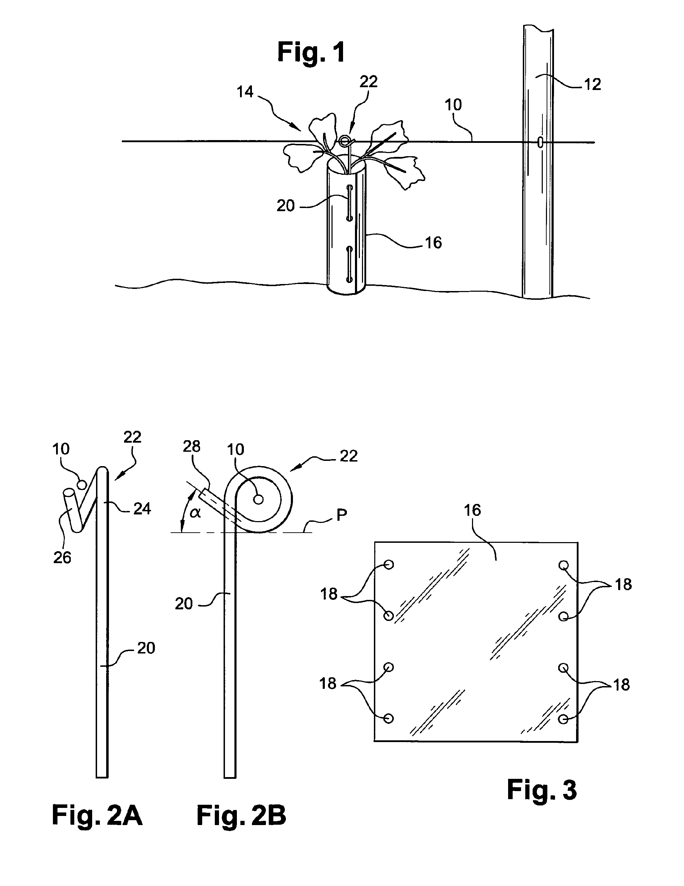

La feuille illustrée sur la figure 3 est généralement rectangulaire et peut être réalisée à partir de différents matériaux, notamment en matériaux résistants aux rayons ultra-violets et/ou favorisant la croissance du plant en absorbant la chaleur. Elle peut être imperméable ou en mailles et avoir une ou plusieurs épaisseurs.

Les trous 18 sont disposés au niveau de deux côtés opposés de ladite feuille 16 et peuvent avoir différentes formes, rondes par exemple, de manière équidistante ou non. Selon la résistance de la feuille 16, les côtés sur lesquels sont ménagés les trous peuvent être renforcés.

De manière connue, la tige 20 maintient la feuille en position enroulée autour du plant en passant par les trous 18 de manière adéquate, et son extrémité inférieure est enfoncée dans le sol afin de maintenir l'ensemble en position verticale.

Selon l' invention, la tige 20 comprend des moyens de liaison avec le fil 10 de palissage. Ainsi, la tige est d'une part fixée au sol en partie inférieure et d'autre part reliée au fil de palissage en partie supérieure ce qui permet de maintenir de manière efficace le dispositif en position verticale et limite les risques d'arrachage de ladite tige.

Selon un mode de réalisation préféré et illustré par les figures 2A et 2B, les moyens de liaison sont obtenus par une forme adaptée 22 de la partie supérieure de la tige 20, de préférence en forme de boucle susceptible d'entourer le fil de palissage. Avantageusement, l'extrémité supérieure de la tige 20 présente une forme en vrille d'une seule spire permettant une mise en place aisée. Ainsi, lorsque le dispositif de protection est mis en place autour du jeune plant, il suffit de disposer le fil de palissage entre les zones 24 et 26 de la tige tel qu'illustré sur la figure 2A et de faire pivoter la tige 20 sur elle-même d'un quart de tour afin que la boucle formée par la vrille entoure le fil de palissage tel qu'illustré sur la figure 2B.

Cette forme de tige peut être adaptée à d'autres dispositif s de protection comportant une enveloppe de protection susceptible d'entourer le jeune plant. Selon les cas, l'enveloppe peut ne pas être en forme de feuille enroulée mais être tout simplement obtenue à partir d'un tube.

Selon une autre caractéristique de l'invention, la tige 20 peut être utilisée seule, sans enveloppe de protection, en tant que simple tuteur.

Plus particulièrement, l'extrémité est repliée au-delà du plan P afin de remonter et constituer un bec 28 avec un angle α. Ceci évite tout désengagement du fil hors de la boucle après mise en place, même en cas de mouvement du fil de palissage durant les interventions sur la vigne.

Selon une autre caractéristique de l'invention, la partie inférieure de la tige peut présenter une forme non rectiligne, de préférence ondulée, de manière à augmenter la résistance à l'arrachage, notamment dans les sols sablonneux ou graveleux.

Bien entendu, la longueur de la tige est adaptée par l'homme du métier en fonction de la distance séparant le fil de palissage du sol.

## Revendications

1. Tuteur sous forme d'une tige (20) susceptible d'être utilisée dans un dispositif de protection pour une plante ou un jeune plant (14) disposé au-dessous d'un fil (10), **caractérisé en ce que** la tige (20) comprend des moyens de liaison au fil (10).

2. Tuteur selon la revendication 1, **caractérisé en ce que** les moyens de liaison sont obtenus par une forme adaptée (22) de la partie supérieure de la tige (20).

3. Tuteur selon la revendication 2, **caractérisé en ce que** la partie supérieure de la tige (20) présente une forme en vrille d'une seule spire.

4. Tuteur selon la revendication 3, **caractérisé en ce que** la spire présente une extrémité qui remonte pour constituer un bec (28) avec un angle α.

5. Tuteur selon l'une quelconque des revendications 1 à 4, **caractérisé en ce que** la partie inférieure de la tige enfoncée dans le sol présente un profil non rectiligne.

6. Dispositif de protection pour une plante ou un jeune plant (14) disposé au-dessous d'un fil (10), comportant une enveloppe de protection (16) susceptible d'entourer ledit jeune plant (14) et un tuteur selon l'une quelconque des revendications 1 à 5.

7. Dispositif de protection selon la revendication 6, **caractérisé en ce que** l'enveloppe de protection comprend une feuille (16) susceptible de s'enrouler autour du jeune plant (14) et disposant au niveau de deux côtés opposés de trous (18), la tige (20) étant susceptible de maintenir la feuille (16) en position enroulée en passant par les trous (18) de manière adéquate.
